# EUROPÄISCHE PATENTSCHRIFT

(11) **EP 1 275 701 B1**
(45) Veröffentlichungstag und Bekanntmachung des Hinweises auf die Patenterteilung: **01.03.2006**
(21) Anmeldenummer: 02014040.6
(22) Anmeldetag: 28.06.2002
(51) Int. Cl.: C09D 7/04, C09D 11/02, C09D 7/12

(54) **Hautverhinderungsmittel**
Antiskinning agent
Agent inhibiteur de peau

(30) Priorität: 11.07.2001 DE 10133727
(43) Veröffentlichungstag der Anmeldung: 15.01.2003
(73) Patentinhaber: Borchers GmbH, 40764 Langenfeld (DE)
(72) Erfinder: Steinert, Andreas, Dr., 40764 Langenfeld (DE); Manshausen, Peter, Dr., 50767 Köln (DE)
(74) Vertreter: Pettrich, Klaus-Günter

(56) Entgegenhaltungen:
- EP-A- 0 903 380
- WO-A-00/11090
- DE-A- 1 519 103
- US-A- 6 156 661

## Beschreibung

Die Erfindung betrifft die Verwendung von Mischungen spezieller organischer Verbindungen (Additivkombinationen) aus den Gruppen der organischen Hydroxylamine, der β-Dicarbonylverbindungen und/oder ausgewählter Derivate der Ameisensäure als Hautverhinderungsadditive in oxidativ trocknenden Lacken bzw. Lacksystemen. Diese erfindungsgemäßen Mischungen sind geeignet, in lufttrocknenden Lacken unerwünschte Hautbildung zu vermeiden, die Durchtrocknung der Lackfilme nach der Applikation zu verbessern und die Verfärbungsneigung des applizierten Lackfilms zu reduzieren. Sie sind auch als Besprühungsagenzien zur Hautverhinderung in Druckfarben einsetzbar.

Die Erfindung liegt auf dem Gebiet der farblosen und pigmentierten oxidativ trocknenden Lacke und Farben auf Basis oxidativ trocknender Öle, Alkydharze, Epoxyester und anderer oxidativ trocknender veredelter Öle sowie der Druckfarben. Sie betrifft die Verwendung bestimmter Additive, die in der Lage sind, die Hautbildung in o.g. Lacksystemen zu verzögern. Zudem sind derartige Additivsysteme in der Lage, Durchtrocknung und Verfärbungsneigung der Lacksysteme zu verbessern.

Öle und Bindemittel, die durch die Einwirkung von Sauerstoff (bevorzugt Luftsauerstoff) mittels Zusatz von Trockenstoffen, z.B. Metallcarboxylaten von Übergangsmetallen, oxidativ vernetzen und dadurch einen festen Bindemittelfilm bilden, können bei der Lagerung in offenen oder geschlossenen Gefäßen an ihrer Oberfläche eine Haut ausbilden. Diese noch vor der eigentlichen Verwendung des Produktes stattfindende Vernetzung ist in hohem Maße unerwünscht und soll daher vermieden werden, da sie z.B. die Handhabung des Lackes erschwert und häufig die gleichmäßige Verteilung der Sikkative stört. Durch Anreicherung und Einbau der trocknungsnotwendigen Sikkative in die sich bildende Lack-Haut kann es zu beträchtlichen Trocknungsverzögerungen des Lackes bei der Applikation kommen.

Hautbildung ist auch beim applizierten Lackfilm nachteilig und daher unerwünscht. Eine zu schnelle Trocknung der Lackoberfläche verhindert die gleichmäßige Durchtrocknung der unteren Filmschichten durch die Abschirmung vom trocknungsnotwendigen Sauerstoff, welcher durch zu schnelle Oberflächentrocknung nicht ausreichend in den Lackfilm eindringen und sich verteilen kann. Daraus können z.B. Verlaufsstörungen des Lackfilms, Haftungsprobleme oder nicht ausreichend harte Filme resultieren.

Es ist daher Stand der Technik, dem Lack organische Substanzen zuzugeben, welche die Reaktion des Sikkativmetalls mit (Luft)sauerstoff hemmen. Dies kann sowohl durch Bindung des Sauerstoffs als auch durch Komplexierung des Sikkativmetalls geschehen. Aufstellungen bekannter für diesen Zweck geeigneter Verbindungen finden sich z.B. in H. Kittel "Lehrbuch der Lacke und Beschichtungen", Colomb Verlag 1976; J. Bieleman "Lackadditive" Wiley VCH 1998 oder Römpp Lexikon "Lacke und Druckfarben", Thieme Verlag 1998.

Darüber hinaus beschreibt die DE-A 3 418 988 den Einsatz aliphatischer α-Hydroxyketone als Hautverhinderungsmittel, in der DE-A 1 519 103 werden N,N-dialkylierte Hydroxylamine für diesen Anwendungszweck genannt. Diese führen jedoch bei alleiniger Verwendung aufgrund ihrer geringen Flüchtigkeit zu starken Trocknungsverzögerungen und oft auch zu verringerten Filmhärten, so dass ihre Einsatzmöglichkeiten begrenzt sind und sie sich als Hautverhütungsmittel nicht etablieren konnten. In der EP-A 0 903 380 ist die Verwendung von α-Keto-funktionalisierten Carbonsäuren und Dicarbonsäuren sowie deren Derivaten gegebenenfalls in Kombination mit Diketoverbindungen als Hautverhinderungsmittel beschrieben. Eine nachteilige Eigenschaft derartiger Produkte liegt jedoch in ihrer nur begrenzten Stabilität und damit eingeschränkten Lagerfähigkeit. In der WO 00/11090 werden schließlich Pyrazol- oder Imidazolderivate gegebenenfalls in Kombination mit aliphatischen Diketonen, insbesondere Acetylaceton, für diesen Zweck empfohlen. Die genannten aromatischen Amine bewirken aber starke Verfärbungen des Lackansatzes und auch des applizierten Lackfilms und verursachen ebenfalls starke Trocknungsverzögerungen.

US 6 156 661 beschreibt eine wässrige Lösung zur Beseitigung von chemischen Rückständen auf einer Metall- oder Dielektrika-Oberfläche enthaltend Gemische aus :
einer mono-, di- oder trifunktionalen Carbonsäure und
einem quarternären Amin, Ammoniumhydroxid, Hydroxylamin, Hydrazin oder deren Salze. Diese werden als Puffersubstanz verwendet.

Es kommen saure (pH-Wert 3,5 - 7,0) wässrige Lösungen der Komponenten (I) und (II) zum Einsatz, US 6 156 661 nennt als Einsatzzweck der genannten Gemische die Reinigung von Metalloberflächen.

In der Technik werden als Hautverhinderungsmittel heute meist Oxime (insbesondere Butanonoxim) oder geeignete phenolische Verbindungen eingesetzt. Die phenolischen Hautverhinderer weisen jedoch eine signifikante Antrocknungsverzögerung auf, so dass sie alleine nur für bestimmte Lackformulierungen in Frage kommen. Oxime, wie z.B. das Methylethylketoxim oder das Butyraldoxim, zeigen hingegen aufgrund ihrer Flüchtigkeit nur geringe Antrocknungsverzögerungen. Der bedeutendste Nachteil der heute in großem Umfange eingesetzten Oxime liegt in ihrer Toxizität. So wurde in einer Langzeit-Inhalationsstudie an Ratten und Mäusen nach Exposition von Butanonoxim ein vermehrtes Auftreten von Lebertumoren beobachtet, aufgrund dessen die deutsche MAK-Kommission die Substanz als Kanzerogen Kategorie III A 2 eingestuft hat (MAK-Liste 1997). Für den Anwender hat dies die Einhaltung aufwendiger persönlicher Schutzmaßnahmen bei der Verarbeitung von Lacken, die Oxime als Hautverhinderungsmittel enthalten, zur Folge.

Es war somit Aufgabe der vorliegenden Erfindung, Additive bereitzustellen, welche die Hautbildung in Lacken und Farben über einen langen Zeitraum verhindern und dabei nur eine geringe Antrocknungsverzögerung besitzen. Darüber hinaus sollten diese die erhaltenen Filmhärten der Lackfilme nicht negativ beeinflussen, keine Verfärbungen verursachen und keine nachteiligen toxikologischen Eigenschaften besitzen.

Die erfindungsgemäß verwendeten Additive sind Mischungen spezieller organischer Verbindungen, die als Hautverhinderungsmittel in viele verschiedene oxidativ trocknende Lacke und Farben eingearbeitet und aufgrund ihrer physikalischen Eigenschaften unproblematisch und vielseitig in entsprechenden Lackformulierungen eingesetzt werden.

Es wurde überraschend gefunden, dass diese Anforderungen durch Gemische bestehend aus den nachfolgend beschriebenen organischen Verbindungen gelöst werden konnten. Insbesondere konnten auch die oben genannten Nachteile der beschriebenen Hydroxylamine als Hautverhinderungsmittel durch Kombination derartiger Substanzen mit den folgend beschriebenen weiteren Verbindungen vermieden und somit die Anforderungen als Hautverhinderungsmittel besser erfüllende Produkte erhalten werden.

Gegenstand der Erfindung ist daher die Verwendung von Gemischen organischer Verbindungen der Formel (I) 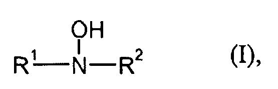
in welchen die Reste
- R¹ und R²: unabhängig voneinander für Wasserstoff (H), Alkylrest C₁-C₂₀ linear oder verzweigt, gegebenenfalls ungesättigt, gegebenenfalls einfach oder mehrfach substituiert, oder Arylrest mit C₆-C₁₂ oder Aralkylrest mit C₇-C₁₄ oder Cycloalkylrest mit C₅-C₇ stehen,

mit organischen Verbindungen der Formel (II) 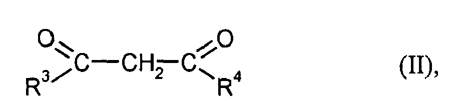
in welcher
unabhängig voneinander die Reste
- R³: Wasserstoff (H), Alkylrest C₁-C₁₉, gegebenenfalls ungesättigt, Hydroxylrest, Alkoxyrest mit C₁-C₇, Aminrest -NR⁷R₈ mit den Resten R⁷ und R⁸ unabhängig voneinander Wasserstoff (H) oder Alkylrest C₁-C₆ und
- R⁴: Wasserstoff (H), Hydroxylrest, Alkylrest C₁-C₁₉, gegebenenfalls ungesättigt, Alkoxyrest mit C₁-C₇, Aminrest - NR⁹R₁₀ mit den Resten R⁹ und R¹⁰ unabhängig voneinander Wasserstoff (H) oder Alkylrest C₁-C₆ bedeuten

und/oder organischen Verbindungen der Formel (III) 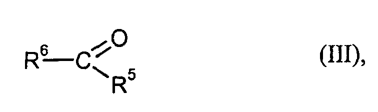
in welcher
unabhängig voneinander die Reste
- R⁵: Wasserstoff (H), Hydroxylrest oder Alkoxyrest mit C₁-C₇ und
- R⁶: Wasserstoff (H) oder Aminrest - NR¹¹R₁₂ mit den Resten R¹¹ und R¹² unabhängig voneinander Wasserstoff (H), Alkylrest mit C₁-C₆, Cycloalkylrest mit C₅-C₇ gegebenenfalls substituiert oder Aminrest -NR₂ dieser gegebenenfalls ebenfalls substituiert, bedeuten,

mit der Maßgabe, dass
R⁵ und R⁶ nicht zugleich Wasserstoff (H) sind,
als Hautverhinderungsmittel in oxidativ trocknenden Lacken und Farben.

Im Sinne der Erfindung werden Gemische von organischen Verbindungen der allgemeinen Formeln (I) bis (III) alleine oder als Lösungen oder Dispersionen oder Emulsionen in Wasser und/oder organischen Lösemitteln verwendet. Hierbei sind alle üblichen Lösemittel, z.B. Aromaten, Testbenzine, Ketone, Alkohole, Ether und Fettsäureester einsetzbar.

Erfindungsgemäß können die organischen Verbindungen der allgemeinen Formeln (I) bis (III) in einem weiten Abmischungsbereich miteinander verwendet werden. Vorzugsweise werden sie im Verhältnis (I) : (II) oder (III) = 0,1:10 bis 10:0,1 Teilen eingesetzt. In einer Anmischung bestehend aus allen drei Komponenten kann jede der Komponenten unabhängig voneinander vorzugsweise im Verhältnis von 0,1 - 10 zu den jeweils anderen Bestandteilen eingesetzt werden. Sie können pur oder in wässrigen Lösungen oder wässriger Dispersion bzw. Emulsion oder in Form von Lösungen in organischen Lösungsmitteln eingesetzt werden, wobei wässrig in diesem Zusammenhang bedeuten soll, dass Wasser entweder alleiniges Lösemittel ist oder aber zu über 50 Gew.-%, bezogen auf die Lösemittelmischung neben üblichen organischen Lösemitteln (z.B. Alkohole) zugegeben ist.

Die Einsatzmenge der erfindungsgemäß verwendeten organischen Verbindungen als Hautverhinderungsmittel richtet sich in erster Linie nach dem Gehalt des Bindemittels und der verwendeten Sikkative der jeweiligen Lackformulierung. In der Regel sollten zwischen 0,001 und 2,0 Gew.-% von Gemischen der Verbindungen nach Formel (I) bis (III) zugegeben werden. Bevorzugte Einsatzmengen sind 0,01 bis 0,5 Gew.-%, jeweils bezogen auf Gesamtrezeptur der Lackformulierung. Die erforderlichen Einsatzmengen richten sich auch nach der Art des Bindemittels und der verwendeten Pigmente. So kann in speziellen Systemen die einzusetzende relative Additivmenge auch größer sein als 2,0 Gew.-% (bezogen auf die Gesamtrezeptur).

Es ist ein Vorteil der erfindungsgemäß verwendeten Mischungen, dass sie in einer breiten Palette an Bindemitteln und bei Einsatz verschiedener Sikkative zuverlässig die Hautbildung verhindern, aber andere Trocknungseigenschaften des Lackes nicht nachteilig beeinflussen.

Vorteilhaft können die erfindungsgemäß verwendeten Gemische zur Verbesserung der Durchtrocknung, des Glanzes und der Verfärbungsbeständigkeit von oxidativ trocknenden Lacksystemen verwendet werden.

### Beispiele

### Ausführungsformen

Beispielhaft sind nachfolgende Ausführungsformen der für die erfindungsgemäße Verwendung geeigneten Gemische der organischen Verbindungen der Formeln (I) - (III) als Hautverhinderungsmittel genannt:
a) 19 % Diethylhydroxylamin, 22 % Diethylformamid, 59 % Wasser;
b) 19 % Diethylhydroxylamin, 22 % Diethylformamid, 59 % Ethanol;
c) 15 % Diethylhydroxylamin, 9 % 2,4-Pentandion, 60 % Ethanol, 16 % Wasser;
d) 19 % Diethylhydroxylamin, 17,5 % N-Methylacetoacetamid, 63,5 % Ethanol;
e) 10 % Diethylhydroxylamin, 9 % Hydrazincarbonsäureethylester, 79,5 % Ethanol, 1,5 % Wasser;
f) 25 % Dibenzylhydroxylamin, 15 % N-Methylacetoacetamid, 10 % Ethanol, 50 % Aceton;
g) 23 % Dibenzylhydroxylamin, 10 % Diethylformamid, 10 % Ethanol, 57 % Aceton;
h) 10 % Diethylhydroxylamin, 9 % Malonsäure, 10 % Diethylformamid, 60 % Ethanol, 11 % Wasser;
i) 10 % Diethylhydroxylamin, 9 % Ethylformiat, 50 % Ethanol, 31 % Wasser;
j) 10 % Diethylhydroxylamin, 10 % Acetessigsäureethylester, 78 % Wasser;
k) 10 % Diethylhydroxylamin, 9 % Malonsäuredimethylester, 60 % Ethanol, 21 % Wasser
l) 10 % Diethylhydroxylamin, 9 % Malonsäure, 50 % Ethanol, 31 % Wasser
m) 20 % Hydroxylamin, 15 % N-Methylacetoacetamid, 30 % Ethanol, 35 % Wasser
n) 24 % Hydroxylamin, 11 % Hydrazincarbonsäureethylester, 25 % Ethanol, 40 % Wasser

### Beispiele für die der erfindungsgemäße Verwendung bestimmter Additive als Hautverhinderungsmittel

1. Eine Lackformulierung bestehend aus 25,0 g eines langöligen hochglänzenden weißen Alkydharzdecklackes (Bindemittelfestanteil 68 Gew.-%) wird mit 0,15 g eines cobalthaltigen Sikkativs (Octa-Soligen® Cobalt 6 der Borchers GmbH, enthält 6 Gew.-% Co), 0,33 g eines Zirkonhaltigen Sikkativs (Octa-Soligen® Zirkon 18 der Borchers GmbH, enthält 18 Gew.-% Zr) und 0,18 g eines Calciumhaltigen Sikkativs (Octa-Soligen® Calcium 4 der Borchers GmbH, enthält 4 Gew.-% Calcium) versetzt. Zu der Formulierung werden 0,018 g des unter a) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei 33 Tage verhindert. Im Vergleich dazu betrug die unter identischen Bedingungen bestimmte Hautbildungszeit einer Probe ohne Hautverhinderungsadditiv 5 Tage, diejenige einer Probe, welche eine übliche, geeignete Menge Butanonoxim enthielt (0,12 g), 18 Tage. Die Farbmaßzahl b* eines entsprechenden Lackfilmes mit 100 µm Nassfilmschichtdicke (nach CIELAB, entsprechend DIN 6174), bestimmt nach 1 Woche Lagerzeit, ergab bei Verwendung des erfindungsgemäßen Gemisches einen um 0,7463 Punkte kleineren Wert als der unter identischen Bedingungen bestimmte Farbwert derjenigen Probe, welche Butanonoxim enthielt, wodurch eine geringere Vergilbung des Filmes angezeigt wird.
2. Eine Lackformulierung bestehend aus 25,0 g eines hochglänzenden weißen Alkydharzdecklackes (Bindemittelfestanteil 36,9 Gew.-%) wird mit 0,38 g eines Cobalthaltigen Mischtrockners (Octa-Soligen® Trockner 203 der Borchers GmbH, enthält 1,2 Gew.-% Co, 3,2 Gew.-% Zink und 7,2 Gew.-% Barium) versetzt. Zu der Formulierung werden 0,046 g des unter c) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei mehr als 27 Tage verhindert. Im Vergleich dazu betrug die unter identischen Bedingungen bestimmte Hautbildungszeit einer Probe ohne Hautverhinderungsadditiv 2 Tage und diejenige einer Probe, welche eine übliche, geeignete Menge Butanonoxim enthielt (0, 041 g), 10 Tage. Der Glanz des Lackfilmes (nach DIN 67530), bestimmt nach 1 Woche Lagerzeit, wurde bei Verwendung des erfindungsgemäßen Gemischs zu 85,9 (Messung bei 20°) bzw. 92,8 Punkten (Messung bei 60°) bestimmt. Im Vergleich dazu betrug der unter identischen Bedingungen bestimmte Glanz des Lackfilmes der Probe ohne Hautverhinderungsadditiv 81,6 Punkte (Messung bei 20°) bzw. 88,5 Punkte (Messung bei 60°), derjenige des Films der Butanonoxim enthaltenden Probe betrug 82,1 bzw. 89,9 Punkte (bei 20° bzw. 60°). Die Farbmaßzahl b* eines entsprechenden Lackfilmes mit 100 µm Nassfilmschichtdicke (nach CIELAB, entsprechend DIN 6174), bestimmt nach 1 Woche Lagerzeit, ergab bei Verwendung des erfindungsgemäßen Gemisches einen um 0,300 Punkte kleineren Wert als der unter identischen Bedingungen bestimmte Farbwert derjenigen Probe, welche Butanonoxim enthielt, wodurch eine geringere Vergilbung des Filmes angezeigt wird.
3. Eine Lackformulierung bestehend aus 30,0 g eines langöligen Alkydharzes (Alkydal® U 601 der Bayer AG) und 2,2 g Testbenzin D 60 wird mit 0,10 g eines Cobalthaltigen Sikkativs (Octa-Soligen® Cobalt 6 der Borchers GmbH, enthält 6 Gew.-% Co) und 0,4 g eines Calciumhaltigen Sikkativs (Octa-Soligen® Calcium 4 der Borchers GmbH, enthält 4 Gew.-% Calcium) versetzt. Zu der Formulierung werden 0,005 g des unter d) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei mehr als 50 Tage verhindert. Im Vergleich dazu betrug die unter identischen Bedingungen bestimmte Hautbildungszeit einer Probe ohne Hautverhinderungsadditiv 6 Tage, die Hautbildungszeit einer Probe, welche eine übliche, geeignete Menge (0,05 g) Butanonoxim enthielt, 16 Tage und diejenige einer Probe, welche eine identische Menge (0,001 g) Diethylhydroxylamin im selben Lösemittel enthielt 7 Tage. Die Pendelhärte nach König (bestimmt nach DIN 53 157, 100 µm Nassfilmschichtdicke) eines Lackfilme versetzt mit dem erfindungsgemäßen Gemisch betrug 97 sec. nach 1 Woche Lagerzeit. Im Vergleich dazu betrug die unter identischen Bedingungen bestimmte Pendelhärte des Lackfilmes der Probe ohne Hautverhinderungsadditiv 96 sec., diejenige des Films der Butanonoxim enthaltenden Probe ebenfalls 97 sec. und diejenige des Films der Diethylhydroxylamin enthaltenden Probe 93 sec., jeweils nach 1 Woche Lagerzeit.
4. Eine Lackformulierung bestehend aus 30,0 g eines hochglänzenden weißen Alkydharzdecklackes (Bindemittelfestanteil 36,9 Gew.-%) wird mit 0,40 g eines Cobalthaltigen Mischtrockners (Octa-Soligen® Trockner 203 der Borchers GmbH, enthält 1,2 Gew.-% Co, 3,2 Gew.-% Zink und 7,2 Gew.-% Barium) versetzt. Zu der Formulierung werden 0,005 g des unter b) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei 42 Tage verhindert. Im Vergleich dazu betrug die unter identischen Bedingungen bestimmte Hautbildungszeit einer Probe ohne Hautverhinderungsadditiv 8 Tage, die Hautbildungszeit einer Probe, welche eine übliche, geeignete Menge (0,05 g) Butanonoxim enthielt, 21 Tage und diejenige einer Probe, welche eine identische Menge (0,001 g) Diethylhydroxylamin im selben Lösemittel enthielt, ebenfalls 21 Tage. Die Trocknungszeit eines entsprechenden Lackfilmes (100 µm Nassfilmschichtdicke) des erfindungsgemäßen Gemisches betrug 12 h (Nadelspurtrocknung nach Prüfvorschrift 100-94 der Borchers GmbH). Die unter identischen Bedingungen bestimmte Trocknungszeit einer Probe ohne Hautverhinderungsadditiv betrug 10 h 30 min., diejenige der Probe, die Butanonoxim enthielt, wurde zu 10 h bestimmt. Die Trockenzeit des Lackfilmes der Probe, die Diethylhydroxylamin enthielt betrug 14 h. Die Farbmaßzahl b* eines entsprechenden Lackfilmes mit 100 µm Nassfilmschichtdicke (nach CIELAB, entsprechend DIN 6174), bestimmt nach 1 Woche Lagerzeit, betrug bei Verwendung des erfindungsgemäßen Gemisches 2,2754. Die unter identischen Bedingungen bestimmten Farbwerte der Proben ohne Hautverhütungsmittel bzw. mit einer identischen Menge (0,001 g) Diethylhydroxylamin im selben Lösemittel betrugen 2,4214 bzw. 2,4434 Einheiten, wodurch eine geringere Vergilbung des Lackansatzes enthaltend das erfindungsgemäße Gemisch angezeigt wird.
5. Eine Lackformulierung bestehend aus 30,0 g eines langöligen Alkydharzes (Alkydal® U 601 der Bayer AG) und 2,2 g Testbenzin D 60 wird mit 0,10 g eines Cobalthaltigen Sikkativs (Octa-Soligen® Cobalt 6 der Borchers GmbH, enthält 6 Gew.-% Co) und 0,4 g eines Calciumhaltigen Sikkativs (Octa-Soligen® Calcium 4 der Borchers GmbH, enthält 4 Gew.-% Calcium) versetzt. Zu der Formulierung werden 0,023 g des unter h) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei 22 Tage verhindert. Im Vergleich dazu betrug die unter identischen Bedingungen bestimmte Hautbildungszeit einer Probe ohne Hautverhinderungsadditiv 3 Tage und diejenige einer Probe, welche eine übliche, geeignete Menge Butanonoxim enthielt (0,05 g), 10 Tage. Die Pendelhärte nach König (bestimmt nach DIN 53 157, 100 µm Nassfilmschichtdicke) eines Lackfilme versetzt mit dem erfindungsgemäßen Gemisch betrug 75 sec. nach 1 Woche Lagerzeit. Im Vergleich dazu betrug die unter identischen Bedingungen bestimmte Pendelhärte des Lackfilmes der Probe ohne Hautverhinderungsadditiv 73 sec., diejenige des Films der Butanonoxim enthaltenden Probe 76 sec.
6. Eine Lackformulierung bestehend aus 40,0 g eines langöligen Alkydharzes (Alkydal® F 681 der Bayer AG), 4,0 g Testbenzin D 60, 4,0 g Xylol, 1,0 g n-Butanol wird mit 0,18 g eines Cobalthaltigen Sikkativs (Trockner 69 der Borchers GmbH, enthält 6 Gew.-% Co und 9 Gew.-% Zirkonium) und 0,4 g eines Calciumhaltigen Sikkativs (Octa-Soligen® Calcium 10 der Borchers GmbH, enthält 10 Gew.-% Calcium) versetzt. Zu der Formulierung werden 0,04 g des unter e) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei 102 Tage verhindert. Im Vergleich dazu betrug die unter identischen Bedingungen bestimmte Hautbildungszeit einer Probe ohne Hautverhinderungsadditiv 11 Tage, die Hautbildungszeit einer Probe, welche eine übliche, geeignete Menge (0,10 g) Butanonoxim enthielt, 26 Tage und diejenige einer Probe, welche eine identische Menge (0,004 g) Diethylhydroxylamin im selben Lösemittelgemisch enthielt, ebenfalls 26 Tage. Die Pendelhärte nach König (bestimmt nach DIN 53157, 100 µm Nassfilmschichtdicke) eines Lackfilme versetzt mit dem erfindungsgemäßen Gemisch betrug 41 sec. nach 1 Woche Lagerzeit. Im Vergleich dazu betrug die unter identischen Bedingungen bestimmte Pendelhärte des Lackfilmes der Probe ohne Hautverhinderungsadditiv 29 sec., diejenige des Films der Butanonoxim enthaltenden Probe 32 sec. und diejenige des Films der Diethylhydroxylamin enthaltenden Probe 37 sec., jeweils nach 1 Woche Lagerzeit.
7. Eine Lackformulierung bestehend aus 25,0 g eines hochglänzenden weißen Alkydharzdecklackes (Bindemittelfestanteil 36,9 Gew.-%) wird mit 0,38 g eines Cobalthaltigen Mischtrockners (Octa-Soligen® Trockner 203 der Borchers GmbH, enthält 1,2 Gew.-% Co, 3,2 Gew.-% Zink und 7,2 Gew.-% Barium) versetzt. Zu der Formulierung werden 0,069 g des unter i) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei mehr als 21 Tage verhindert. Im Vergleich dazu betrug die unter identischen Bedingungen bestimmte Hautbildungszeit einer Probe ohne Hautverhinderungsadditiv 2 Tage und diejenige einer Probe, welche eine übliche, geeignete Menge Butanonoxim enthielt (0,041 g), 10 Tage. Die Farbmaßzahl b* eines entsprechenden Lackfilmes mit 100 µm Nassfilmschichtdicke (nach CIELAB, entsprechend DIN 6174), bestimmt nach 1 Woche Lagerzeit, ergab bei Verwendung des erfindungsgemäßen Gemisches einen um 0,166 Punkte kleineren Wert als der unter identischen Bedingungen bestimmte Farbwert der Butanonoxim enthaltenden Probe. Zugleich ergab sich ein um 0,3117 Punkte kleinerer Farbwert als der unter identischen Bedingungen bestimmte Farbwert der Probe ohne Hautverhinderungsmittel, wodurch eine geringere Vergilbung des Filmes angezeigt wird. Der Glanz des Lackfilmes (nach DIN 67530), bestimmt nach 1 Woche Lagerzeit, wurde bei Verwendung des erfindungsgemäßen Gemischs zu 87,8 (Messung bei 20°) bzw. 95,6 Punkten (Messung bei 60°) bestimmt. Im Vergleich dazu betrug der unter identischen Bedingungen bestimmte Glanz des Lackfilmes der Probe ohne Hautverhinderungsadditiv 81,6 Punkte (Messung bei 20°) bzw. 88,5 Punkte (Messung bei 60°), derjenige des Films der Butanonoxim enthaltenden Probe betrug 82,1 bzw. 89,9 Punkte (bei 20° bzw. 60°).
8. Eine Lackformulierung bestehend aus 40,0 g eines hochglänzenden weißen Alkydharzdecklackes (Bindemittelfestanteil 38 Gew.-%) wird mit 0,20 g eines Cobalthaltigen Sikkativs (Octa-Soligen® Cobalt 6 der Borchers GmbH, enthält 6 Gew.-% Co), 0,25 g eines Zirkonhaltigen Sikkativs (Octa-Soligen® Zirkon 18 der Borchers GmbH, enthält 18 Gew.-% Zr) und 0,46 g eines Calciumhaltigen Sikkativs (Octa-Soligen® Calcium 10 der Borchers GmbH, enthält 10 Gew.-% Calcium) versetzt. Zu der Formulierung werden 0,092 g des unter k) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei mehr als 28 Tage verhindert. Im Vergleich dazu betrug die unter identischen Bedingungen bestimmte Hautbildungszeit einer Probe ohne Hautverhinderungsadditiv 5 Tage und diejenige einer Probe, welche eine übliche, geeignete Menge Butanonoxim enthielt (0,162 g), 21 Tage. Die Pendelhärte nach König (bestimmt nach DIN 53157, 100 µm Nassfilmschichtdicke) eines Lackfilme versetzt mit dem erfindungsgemäßen Gemisch betrug 79 sec. nach 1 Woche Lagerzeit. Im Vergleich dazu betrug die unter identischen Bedingungen bestimmte Pendelhärte des Lackfilmes der Probe ohne Hautverhinderungsadditiv und diejenige des Films der Butanonoxim enthaltenden Probe jeweils 76 sec nach 1 Woche Lagerzeit. Die Farbmaßzahl b* eines entsprechenden Lackfilmes mit 100 µm Nassfilmschichtdicke (nach CIELAB, entsprechend DIN 6174), bestimmt nach 1 Woche Lagerzeit, ergab bei Verwendung des erfindungsgemäßen Gemisches einen um 0,293 Punkte kleineren Wert als der unter identischen Bedingungen bestimmte Farbwert der Butanonoxim enthaltenden Probe, wodurch eine geringere Vergilbung des Filmes bei Verwendung des erfindungsgemäßen Gemischs angezeigt wird.
9. Eine Lackformulierung bestehend aus 40,0 g eines hochglänzenden weißen Alkydharzdecklackes (Bindemittelfestanteil 38 Gew.-%) wird mit 0,20 g eines Cobalthaltigen Sikkativs (Octa-Soligen® Cobalt 6 der Borchers GmbH, enthält 6 Gew.-% Co), 0,25 g eines Zirkonhaltigen Sikkativs (Octa-Soligen® Zirkon 18 der Borchers GmbH, enthält 18 Gew.-% Zr) und 0,46 g eines Calciumhaltigen Sikkativs (Octa-Soligen® Calcium 10 der Borchers GmbH, enthält 10 Gew.-% Calcium) versetzt. Zu der Formulierung werden 0,092 g des unter 1) aufgeführten Gemisches gegeben und die Zeit bis zur Hautbildung an der Oberfläche eines ca. 1/4 gefüllten verschlossenen 125 ml-PE-Bechers ermittelt. Die Hautbildung wurde hierbei mehr als 28 Tage verhindert. Im Vergleich dazu betrug die unter identischen Bedingungen bestimmte Hautbildungszeit einer Probe ohne Hautverhinderungsadditiv 5 Tage und diejenige einer Probe, welche eine übliche, geeignete Menge Butanonoxim enthielt (0,162 g), 21 Tage. Die Pendelhärte nach König (bestimmt nach DIN 53157, 100 µm Nassfilmschichtdicke) eines Lackfilme versetzt mit dem erfindungsgemäßen Gemisch betrug 78 sec. nach 1 Woche Lagerzeit. Im Vergleich dazu betrug die unter identischen Bedingungen bestimmte Pendelhärte des Lackfilmes der Probe ohne Hautverhinderungsadditiv und diejenige des Films der Butanonoxim enthaltenden Probe jeweils 76 sec nach 1 Woche Lagerzeit. Die Filmhelligkeit L eines entsprechenden Lackfilmes mit 100 µm Nassfilmschichtdicke (nach CIELAB, entsprechend DIN 6174), bestimmt nach 1 Woche Lagerzeit, ergab bei Verwendung des erfindungsgemäßen Gemisches einen um 0,318 Punkte höheren Wert als der unter identischen Bedingungen bestimmte Wert der Butanonoxim enthaltenden Probe, wodurch eine höhere Filmhelligkeit des mit dem erfindungsgemäßen Gemisch versetzten Aufzuges angezeigt wird.

## Patentansprüche

1. Verwendung von Gemischen organischer Verbindungen der Formel (I) 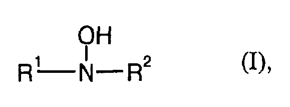
in welchen
unabhängig voneinander die Reste
R¹ und R² für Wasserstoff (H), Alkylrest C₁-C₂₀ linear oder verzweigt, gegebenenfalls ungesättigt, gegebenenfalls einfach oder mehrfach substituiert, oder Arylrest mit C₆-C₁₂ oder Aralkylrest mit C₇-C₁₄ oder Cycloalkylrest mit C₅-C₇ stehen,
mit organischen Verbindungen der Formel (II) 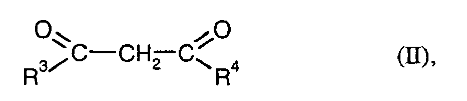
in welcher
unabhängig voneinander die Reste
R³ Wasserstoff (H), Alkylrest C₁-C₁₉, gegebenenfalls ungesättigt, Hydroxylrest, Alkoxyrest mit C₁-C₇, Aminrest - NR⁷R₈ mit den Resten R⁷ und R⁸ unabhängig voneinander Wasserstoff (H) oder Alkylrest C₁-C₆ und
R⁴ Wasserstoff (H), Hydroxylrest, Alkylrest C₁-C₁₉, gegebenenfalls ungesättigt, Alkoxyrest mit C₁-C₇, Aminrest - NR⁹R₁₀ mit den Resten R⁹ und R¹⁰ unabhängig voneinander Wasserstoff (H) oder Alkylrest C₁₋C₆, bedeuten
und/oder organischen Verbindungen der Formel (III) 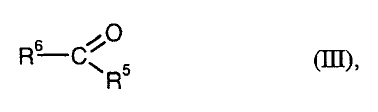
in welcher
unabhängig voneinander die Reste
R⁵ Wasserstoff (H), Hydroxylrest oder Alkoxyrest mit C₁-C₇ und
R⁶ Wasserstoff (H) oder Aminrest -NR₂ mit den Resten R¹¹ und R¹² unabhängig voneinander Wasserstoff (H), Alkylrest mit C₁-C₆, Cycloalkylrest mit C₅-C₇ gegebenenfalls substituiert oder Aminrest - NR¹¹R₁₂ dieser gegebenenfalls ebenfalls substituiert, bedeuten,
mit der Maßgabe dass
R⁵ und R⁶ nicht zugleich Wasserstoff (H) sein können, als Hautverhinderungsmittel in oxidativ trocknenden Lacken und Farben.

2. Verwendung nach Anspruch 1, **dadurch gekennzeichnet, dass** die Gemische in Wasser und/oder organischen Lösemitteln verwendet werden.

3. Verwendung nach einem der Ansprüche 1 oder 2, **dadurch gekennzeichnet, dass** die Farben und Lacke farblos oder pigmentierte Lacke und Farben oder Druckfarben sind.

4. Verwendung nach einem der Ansprüche 1 bis 2, **dadurch gekennzeichnet, dass** die Gemische in Einsatzmengen von 0,001 bis 2,0 Gew.-% jeweils bezogen auf den Gesamtansatz verwendet werden.

5. Verwendung nach einem der Ansprüche 1 bis 4, **dadurch gekennzeichnet, dass** die Gemische zur Verbesserung der Durchtrocknung, des Glanzes und der Verfärbungsbeständigkeit von oxidativ trocknenden Lacksystemen verwendet werden können.

6. Verwendung nach einem der Ansprüche 1 bis 4, **dadurch gekennzeichnet, dass** die Gemische als Besprühungsagenzien zur Hautverhinderung in Druckfarben verwendet werden.

7. Wässrige Dispersionen oder Emulsionen enthaltend Gemische gemäß Anspruch 1.

## Claims

1. Use of mixtures of organic compounds having formula (I) 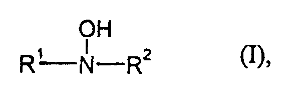
in which the radicals
R¹ and R² mutually independently stand for hydrogen (H), alkyl radical C₁-C₂₀, linear or branched, optionally unsaturated, optionally mono- or polysubstituted, or aryl radical with C₆₋C₁₂ or aralkyl radical with C₇-C₁₄ or cycloalkyl radical with C₅-C₇,
with organic compounds having formula (II) 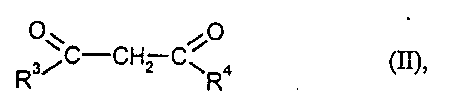
in which
mutually independently the radicals
R³ denotes hydrogen (H), alkyl radical C₁-C₁₉, optionally unsaturated, hydroxyl radical, alkoxy radical with C₁-C₇, amine radical -NR⁷R₈ with radicals R⁷ and R⁸ mutually independently hydrogen (H) or alkyl radical C₁-C₆ and
R⁴ denotes hydrogen (H), hydroxyl radical, alkyl radical C₁-C₁₉, optionally unsaturated, alkoxy radical with C₁-C₇, amine radical -NR⁹R₁₀ with radicals R⁹ and R¹⁰ mutually independently hydrogen (H) or alkyl radical C₁-C₆
and/or organic compounds having formula (III) 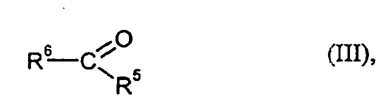
in which
mutually independently the radicals
R⁵ denote hydrogen (H), hydroxyl radical or alkoxy radical with C₁-C₇ and
R⁶ denote hydrogen (H) or amine radical -NR₂ with radicals R¹¹ and R¹² mutually independently hydrogen (H), alkyl radical with C₁-C₆, cycloalkyl radical with C₅-C₇, optionally substituted or amine radical - NR¹¹R₁₂ likewise optionally substituted,
with the proviso that
R⁵ and R⁶ are not simultaneously hydrogen (H), as anti-skinning agents in oxidatively drying paints and coatings.

2. Use according to claim 1, **characterised in that** the mixtures are used in water and/or organic solvents.

3. Use according to one of claims 1 or 2, **characterised in that** the coatings and paints are colourless or pigmented paints and coatings or printing inks.

4. Use according to one of claims 1 to 2, **characterised in that** the mixtures are used in amounts of 0.001 to 2.0 wt.%, relative in each case to the overall formulation.

5. Use according to one of claims 1 to 4, **characterised in that** the mixtures can be used to improve the complete drying, gloss and resistance to discoloration of oxidatively drying paint systems.

6. Use according to one of claims 1 to 4, **characterised in that** the mixtures can be used as spraying agents to prevent skinning in printing inks.

7. Mixtures according to claim 1 containing aqueous dispersions or emulsions.

## Revendications

1. Utilisation de mélanges de composés organiques de formule (I) 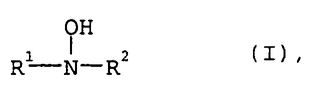
dans laquelle
indépendamment l'un de l'autre, les radicaux ont les significations suivantes :
R¹ et R² représentent un atome d'hydrogène (H), un radical alkyle en C₁-C₂₀ linéaire ou ramifié, éventuellement insaturé, éventuellement une ou plusieurs fois substitué, ou un radical aryle en C₆-C₁₂ ou un radical aralkyle en C₇-C₁₄ ou cycloalkyle en C₅-C₇,
avec des composés organiques de formule (II) 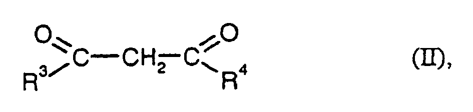
dans laquelle
indépendamment l'un de l'autre, les radicaux ont les significations suivantes :
R³ représente un atome d'hydrogène (H), un radical alkyle en C₁-C₁₉ éventuellement insaturé, un radical hydroxy, un radical alcoxy en C₁-C₇, un radical amino -NR⁷R⁸ dans lequel les radicaux R⁷ et R⁸ représentent indépendamment l'un de l'autre un atome d'hydrogène (H) ou un radical alkyle en C₁-C₆ et
R⁴ représente un atome d'hydrogène (H), un radical hydroxy, un radical alkyle en C₁-C₁₉ éventuellement insaturé, un radical alcoxy en C₁-C₇, un radical amino -NR⁹R¹⁰ dans lequel les radicaux R⁹ et R¹⁰ représentent indépendamment l'un de l'autre un atome d'hydrogène (H) ou un radical alkyle en C₁-C₆
et/ou des composés organiques de formule (III) 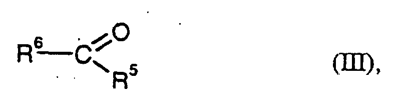
dans laquelle
indépendamment l'un de l'autre les radicaux ont les significations suivantes :
R⁵ représente un atome d'hydrogène (H), un radical hydroxy ou un radical alcoxy en C₁-C₇ et
R⁶ représente un atome d'hydrogène (H) ou un radical amino -NR₂ dans lequel les radicaux R¹¹ et R¹² représentent indépendamment l'un de l'autre un atome d'hydrogène (H), un radical alkyle en C₁-C₆, un radical cycloalkyle en C₅-C₇ éventuellement substitué ou un radical amino -NR¹¹R¹², ce dernier lui aussi éventuellement substitué,
étant entendu que
R⁵ et R⁶ ne peuvent pas être un atome d'hydrogène (H), en tant qu'agent anti-peau dans des peintures et vernis à séchage par oxydation.

2. Utilisation selon la revendication 1, **caractérisée en ce que** les mélanges sont utilisés dans de l'eau et/ou des solvants organiques.

3. Utilisation selon la revendication 1 ou 2, **caractérisée en ce que** les peintures et vernis sont des vernis incolores ou pigmentés ou des encres d'imprimerie.

4. Utilisation selon la revendication 1 ou 2, **caractérisée en ce que** les mélanges sont utilisés en quantités de 0,001 à 2,0 % en poids, chaque fois par rapport au mélange total.

5. Utilisation selon l'une quelconque des revendications 1 à 4, **caractérisée en ce que** les mélanges peuvent être utilisés pour l'amélioration du séchage complet, du brillant et de la résistance au changement de couleur de systèmes de peintures à séchage par oxydation.

6. Utilisation selon l'une quelconque des revendications 1 à 4, **caractérisée en ce que** les mélanges sont utilisés en tant que qu'agent de pulvérisation pour empêcher la formation de peau dans des encres d'imprimerie.

7. Emulsions ou dispersions aqueuses contenant des mélanges selon la revendication 1.
